# EUROPÄISCHE PATENTANMELDUNG

(11) **EP 0 553 735 A1**
(43) Veröffentlichungstag der Anmeldung: **04.08.1993**
(21) Anmeldenummer: 93101024.3
(22) Anmeldetag: 23.01.1993
(51) Int. Cl.: B27C 5/06, B27B 25/10, B23Q 1/25, B27G 5/02

(54) **Tischfräsmaschine**

(30) Priorität: 25.01.1992 DE 9200904 U
(71) Anmelder: BAUGERÄTE-UNION GMBH & CO., MASCHINENHANDELS KG, D-91522 Ansbach (DE)
(72) Erfinder: Bauer, Manfred, W-8832 Weissenburg (DE)
(74) Vertreter: Sasse, Volker, Dipl.-Ing.

(57) **Zusammenfassung**

Eine Tischfräsmaschine (F) zur Holzbearbeitung mit einem senkrecht aus deren Arbeitstischfläche herausstehenden Fräswerkzeug (W) weist einen Schiebeschlitten (A) für die Führung des zu bearbeitenden Holzes auf, der sich mit einer Schnell-Umsetz-Halterung (H) abnehmbar und in zwei zueinander um 180° versetzten Fahrstellungen auf die Arbeitsfläche (1) und die stangenhafte Längsführung (L) aufsetzbar ist. Darüber hinaus läßt sich die Arbeitsfläche (1) des Arbeitstisches (T) mit ansetzbaren Verlängerungs- und Verbreiterungsstücken bzw. -flächen (V₁, V₂, V₃) zur besseren Auflage vergrößern.

## Beschreibung

Die Erfindung betrifft eine Tischfräsmaschine nach dem Oberbegriff des Patentanspruchs 1.

Auf solchen Tischfräsmaschinen, deren Arbeitsfläche ca. 0,35 bis 0,7 qm² groß ist, werden vorwiegend kleinere Werkstücke wie kurze Bretter oder Füllungen, hauptsächlich an ihren Kanten bearbeitet. Das jeweilige Werkstück wird von Hand am Fräswerkzeug vorbeigeschoben. Bei längeren, zu bearbeitenden Flächen wird das Werkstück an einer auf den Arbeitstisch montierten Führungsfläche geführt, um einen geraden Verlauf zu erreichen. Bei der Bearbeitung kürzerer Flächen, insbesondere von Stirnflächen, ist es schwierig, das Werkstück von Hand sauber zu führen und einen geraden Verlauf der abgefrästen oder abgehobelten Fläche zu erzeugen. Denn die Führung an der Führungsfläche muß im Bereich des Fräswerkzeugs unterbrochen sein, so daß das Werkstück in diesem Bereich instabil abgestützt ist. Auch beim Bearbeiten längerer Flächen wird durch die Bewegung des Werkstücks von Hand die Oberflächenqualität oder Ebenheit bzw. Glätte manchmanl unbefriedigend.

Der Erfindung liegt die Aufgabe zugrunde, eine Tischfräsmaschine der eingangs genannten Art dahingehend zu verbessern, daß kleine und große Werkstücke bei einfacher Handhabung, insbesondere auch Stirnflächen, sauber bearbeitet werden, wobei trotzdem die Tischfräsmaschine so wie bisher einsetzbar sein soll, so daß sich insgesamt eine universelle Verwendbarkeit ergibt.

Die gestellte Aufgabe wird erfindungsgemäß mit den im kennzeichnenden Teil des Patentanspruchs 1 enthaltenen Merkmalen gelöst. Mittels des Schiebeschlittens und der Werkstückfixierung können gerade kleine oder schwierig zu bearbeitende Werkstücke bei einfachster Handhabung sauber am Fräswerkzeug vorbeigeführt werden. Die Längsführung gibt die exakte Referenzlinie für die Vorschubbewegung vor. Die Werkstückfixierung hält das Werkstück entlang der Längsführung in der jeweils gewünschten Lage so fest, daß eine qualitativ hochwertige Bearbeitung erreicht wird. Die Verletzungsgefahr ist gerade bei kleinen Werkstücken extrem vermindert, weil der Arbeitende mit seinen Händen nicht in die Nähe des Fräswerkzeuges kommt. Die Qualität auch bei schwierig zu bearbeitenden Stirnflächen ist hoch, weil das Werkstück keine die Oberflächenqualität beeinträchtigenden Eigenbewegungen auszuführen vermag. Die Schnell-Umsetz-Halterung hat den Vorteil, daß mit dem Werkstück von beiden Seiten an das Fräswerkzeug herangefahren werden kann, so daß sich auch lange Bearbeitungsflächen einwandfrei abfräsen oder abhobeln lassen, indem der Schiebeschlitten nach der Bearbeitung einer durch seinen Schiebeweg bestimmten Länge des Werkstücks umgesetzt und dann mit umgespanntem Werkstück auch in der Gegenrichtung relativ zum Fräswerkzeug verfahren wird. Ist die am Werkstück zu bearbeitende Fläche noch länger als die durch das Umsetzen des Schiebeschlittens mit der Führung durch den Schiebeschlitten zu bearbeitende Länge, dann läßt sich der Schiebeschlitten mit einem einfachen Handgriff abnehmen. Die restliche Bearbeitung wird dann unter Verwendung der schon bearbeiteten Fläche als Referenzfläche anhand der üblichen Führungsflächen auf dem Arbeitstisch durchgeführt. Für Werkstücke, die der Halterung und Führung durch den Schiebeschlitten nicht bedürfen, wird der Schiebeschlitten ebenfalls weggenommen und auf herkömmliche Weise gearbeitet. Der Schiebeschlitten ermöglicht ferner auch die Verwendung eines Vorschubapparates, wobei dann der Schiebeschlitten mit dem Vorschubapparat operiert, um eine qualitativ sehr hochwertige Fläche zu fräsen. Die Ausführungsform ist von besonderer Bedeutung, weil das Werkstück möglichst nahe am Fräswerkzeug abgestützt wird, so daß sich auch sehr kleine Werkstücke gut bearbeiten lassen, wobei allerdings sichergestellt ist, daß der Schiebeschlitten nicht mit dem Fräswerkzeug kollidiert.

Eine besonders zweckmäßige Ausführungsform mit eigenständiger Bedeutung geht aus Anspruch 2 hervor. Die Verlängerungs- und Verbreiterungsflächen vergrößern die nutzbare Arbeitsfläche, so daß auch größere oder sperrige Werkstücke bei der Bearbeitung einwandfrei abgestützt sind. Zudem erbringen die Verlängerungsflächen einen optimal großen Schiebehub für den Schiebeschlitten, wie er für längere zu bearbeitende Flächen günstig ist. Die Längsführung liegt unterhalb der Arbeitsfläche, so daß sie von den Werkstücken nicht berührt oder beschädigt wird. Trotz der Längsführung ist eine für die Werkstücke durchgehende und vergrößerte Arbeitsfläche vorgesehen. Der Schiebeschlitten wird auch bei hohen Reaktionskräften, wie sie bei der Bearbeitung dicker Stirnflächen und harten Holzqualitäten auftreten, sicher abgestützt.

Die Ausführungsform gemäß Anspruch 3 ist zweckmäßig, weil sich eine Vergrößerung der Arbeitsfläche des Standard-Arbeitstisches der Tischfräsmaschine um bis zu 100 % oder mehr ergibt. Trotzdem ist die Arbeitsfläche mit der normalen Reichweite der menschlichen Arme und unter Vermittlung des Schiebeschlittens einfach beherrschbar.

Die Ausführungsform gemäß Anspruch 4 ist baulich einfach und zweckmäßig, weil die Längsführung geschützt in dem Kanal zwischen den Stirnseiten untergebracht ist, und weil die Abschlußprofile nicht nur die Längsführung lagern, sondern auch die Verlängerungs- bzw. Verbreiterungsflächen verwindungsfest miteinander verbinden.

Eine besonders zweckmäßige Ausführungsform geht ferner aus Anspruch 5 hervor. Die Schnell-Umsetz-Halterung ist baulich einfach und kostengünstig herzustellen. Sie ist funktionssicher und sehr leicht zu handhaben, was besonders für den Heimwerker wichtig ist. Im Normalbetrieb bei aufgesetztem Schiebeschlitten wird dieser an der Stange sauber und eigenbewegungsfrei geführt. Wird der Schiebeschlitten nicht gebraucht, dann wird die Klaue, die auch in der Art einer geschlitzten Hülse ausgebildet sein kann, in die Aushebeaussparung verfahren und der Schlebeschlitten nur nach oben weggehoben.

Eine baulich einfache und widerstandsfähige Ausführungsform geht ferner aus Anspruch 6 hervor. Die beiden beabstandeten Klauen leiten die Reaktionskräfte bei der Bearbeitung mit wünschenswert großem Abstand in die Stange ein. Die beiden zum Ausheben und Einsetzen des Schiebeschlittens notwendigen Aushebe-Aussparungspaare schwächen die Stange nicht spürbar. Es gibt beim Überfahren der Aushebe-Aussparungspaare auch keinen spürbaren und die Qualität der bearbeiteten Fläche beeinträchtigenden Widerstand. Gegebenenfalls sind die Klauen mit Gleitlagern oder Rollenlagern leichtgängig an der Stange geführt.

Eine besonders zweckmäßige Ausführungsform geht ferner aus Anspruch 7 hervor. Diese Position der Aushebe-Aussparungspaare stellt sicher, daß der Schiebeschlitten nicht aus Versehen beim Anschlagen an dem Abschlußprofil ungewollt nach oben gehoben wird. Vielmehr läßt er sich nur dann abheben, wenn bewußt die Position der Aushebe-Aussparungspaare aufgesucht wird. Ferner wird durch diese gewollte Versetzung der Aushebe-Aussparungspaare sichergestellt, daß bei Verschmutzung oder Ansammlung von Hobel- oder Frässpänen, die das Schieben des Schiebeschlittens bis in die Endstellung verhindern, der Schiebeschiltten trotzdem leicht ausgehoben oder auch eingesetzt werden kann.

Eine baulich einfache, funktionssichere und robuste Ausführungsform geht ferner aus Anspruch 8 hervor. Die Grundplatte übernimmt die Führung des Schiebeschlittens auf der Arbeitsfläche und entlang der Längsführung. Die Platte mit dem Schenkel und die Schraubzwinge lassen sich relativ zur Grundplatte in die notwendige Schwenkstellung einstellen, wobei durch den Drehzapfen stets eine saubere Führung für die Platte gewährleistet ist. Der Feststeller sichert die jeweilige Relativposition zwischen der Platte und der Grundplatte unverrückbar. Das Umstellen des Schiebeschlittens ist mit wenigen Handgriffen einfach durchführbar. Der Drehzapfen kann gleichzeitig als Handhabe beim Verschieben des Schiebeschlittens gute Dienste leisten. Der Schiebeschlitten besteht aus einfachen und wenigen Teilen; er ist gut zu reinigen und relativ leicht, so daß er sich mühelos abnehmen und wieder aufsetzen läßt.

Um vorbestimmte Winkelstellungen der Platte und des Hochschenkels einstellen zu können, sind die Maßnahmen von Anspruch 9 zweckmäßig. Der Verriegelungsansatz stellt beim Eingreifen in eine Ausnehmung eine formschlüssige Positionierung her.

Zusätzlich ist die Maßnahme von Anspruch 10 wichtig, weil beliebige Winkelstellungen durch die Spannfläche hergestellt werden können.

Die Tischfräsmaschine gemäß Anspruch 11 wird durch Erweiterung einer Standard-Tischfräsmaschine für einen breiteren Einsatzbereich umgerüstet. Die einzelnen Komponenten des Nachrüst-Bausatzes lassen sich einfach anbringen. Die derart erweiterte Tischfräsmaschine gewährleistet höchste Qualität bei der Bearbeitung Kleinerer und größerer oder komplizierter Werkstücke, wobei die erreichte Arbeitsqualität nicht nur von der Geschicklichkeit des Benutzers abhängt, sondern von der verbesserten Abstützung auf der vergrößerten Arbeitsfläche und der sauberen Führung und Fixierung der Werkstücke im Schiebeschlitten dominiert wird.

Anhand der Zeichnung wird eine Ausführungsform des Erfindungsgegenstandes erläutert.

Es zeigt:
- Figur 1: eine Perspektivansicht einer Tischfräsmaschine
- Figur 2: eine Druntersicht eines Details von Figur 1,
- Figur 3: eine Draufsicht zu Figur 2 und
- Figur 4: einen Schnitt in der Ebene IV-IV von Figur 3.

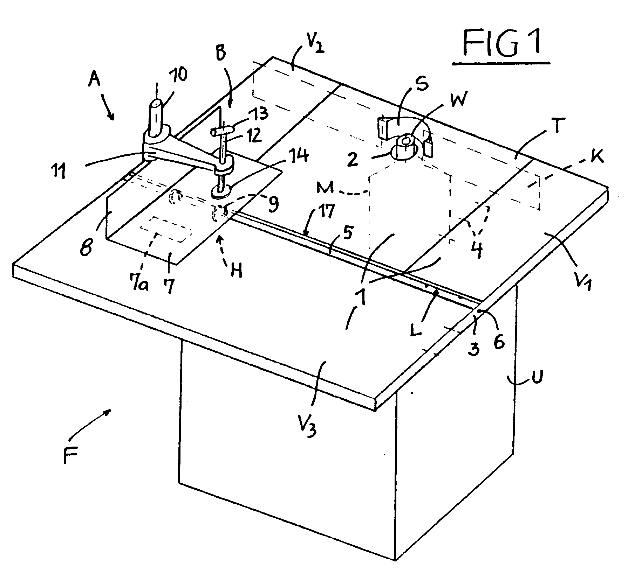

Eine Tischfräsmaschine F gemäß Figur 1 weist einen auf einem Unterbau U angebrachten Arbeitstisch T auf. Ein von einem Motor M getriebenes Fräswerkzeug W ragt von unten durch einen Ausschnitt 2 des Arbeitstisches T. Das Fräswerkzeug W wird auf übliche Weise von einem Arbeitsschutz S teilweise umfaßt. Strichliert sind übliche Führungsflächen K angedeutet, die auf dem Arbeitstisch T verstellbar angebracht sind und dazu dienen, Werkstücke zu führen. An drei Stirnseiten des Arbeitstisches T sind zwei Verlängerungsflächen V₁ und V₂ sowie eine Verbreiterungsfläche V₃ angebaut, so daß sich eine zusammenhängende ebene Arbeitsfläche 1 ergibt, die durch einen parallel zur Fräsrichtung verlaufenden Kanal 17 unterteilt ist. Im Kanal 17 ist unterhalb der Arbeitsfläche 1 eine Längsführung L in Form einer glatten zylindrischen Stange 5 angeordnet. Die Stange 5 ist mit Befestigungselementen 6 in seitlichen Abschlußprofilen 3 festgelegt, die auch die Verlängerungs- und Verbreiterungsflächen V₁, V₂ und V₃ aussteifen. Strichliert angedeutete Befestigungselemente 4 dienen zum Anschließen der Verlängerungs- und Verbreiterungsflächen V₁, V₂, V₃ an den Arbeitstisch T.

Ein Schiebeschlitten A mit einer Werkstückfixierung B läßt sich auf die Arbeitsfläche 1 aufsetzen und nach Wunsch wieder von ihr abnehmen. Zu diesem Zweck ist eine Schnell-Umsetz-Halterung H vorgesehen. Der Schiebeschlitten A läßt sich in zwei um 180^{o} zueinander versetzten Schiebestellungen auf die Arbeitsfläche bzw. die Längsführung L aufsetzen. Gemäß Figur 1 weist der Schiebeschlitten A eine auf der Arbeitsfläche 1 aufliegende Platte 7 auf, die unterseitig mit Gleitstücken 7a besetzt ist. Von der Platte 7 steht ein Hochschenkel 8 nach oben. Mit zwei U-förmigen Klauen 9 an der Unterseite der Platte 7 wird der Schiebeschlitten an der Stange 5 geführt, wobei die Klauen die Stange über mehr als 180^{o} ihres Umfanges umgreifen. An einem vertikalen Drehzapfen 10 ist ein Ausleger 11 verschwenkbar gehalten, der eine Schraubstange 12 mit einem Drehgriff 13 und einer Spannplatte 14 nach Art einer Schraubzwinge lagert . Teil der Schnell-Umsetz-Halterung H, die auch zum Abnehmen und Aufsetzen des Schiebeschlittens dient, sind AushebeAussparungen 19 in der Stange 5, die nahe bei einem Abschlußprofil 3 in die Stange 5 eingeformt sind.

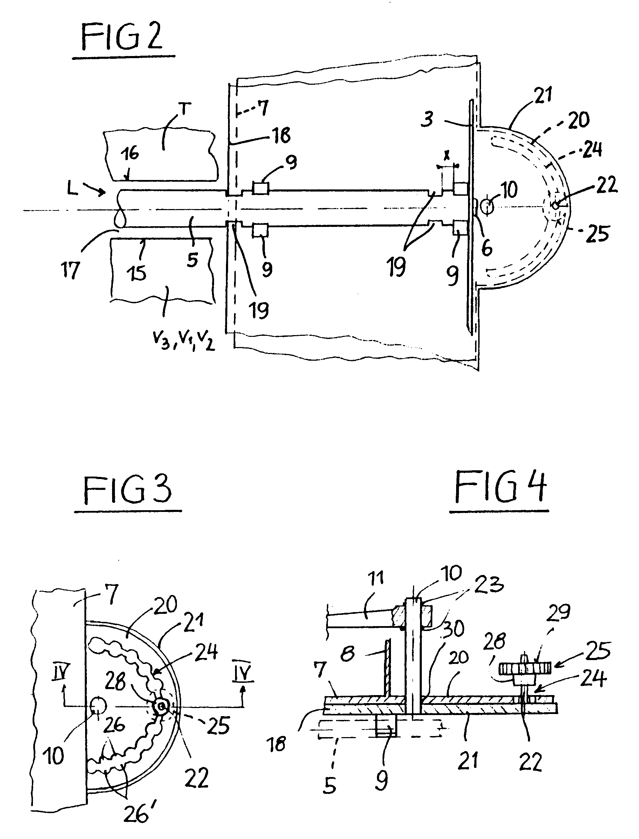

Aus den Figuren 2, 3 und 4 ist der Detailaufbau des Schiebeschlittens A und der Schnell-Umsetz-Halterung H entnehmbar. Unter der Platte 7 liegt eine Grundplatte 18 auf der Arbeitsfläche 1 auf. Die Grundplatte 18 besitzt eine halbkreisförmige Verlängerung 21, auf der eine ebenfalls halbkreisförmige Verlängerung 20 der Platte 7 aufliegt. In der Verlängerung 20 ist eien Bohrung 30 vorgesehen, durch die der in der Grundplatte 21 festgelegte Drehzapfen 10 nach oben steht, der auch die Drehführung der Platte 7 relativ zur Grundplatte 21 übernimmt. In der Verlängerung 21 ist bei der gezeigten Ausführungsform ein Gewindebolzen 22 festgelegt, der nach oben durch einen zum Drehzapfen 10 konzentrischen Führungsschlitz 24 in der Verlängerung 20 ragt. Ein auf den Gewindebolzen 22 aufgeschraubter Feststeller 25 dient zum Festlegen der Platte 7 auf der Grundplatte 18 .

Die beiden Klauen 9 sind an der Unterseite der Grundplatte 18 befestigt. Die Aushebe-Aussparungspaare 19 in der Stange 5 sind um ein Maß X vom Abschlußprofil 3 weggerückt, so daß der Schiebeschlitten A in der in Figur 2 gezeigten Endanschlagstellung nicht ausgehoben werden kann, sondern um das Maß X genau bis zu den Aushebe-Aussparungen 19 verfahren werden muß. Die Stange 5 ist zwischen Stirnflächen 15 und 16 des Arbeitstisches T und der Verbreiterungsfläche V₃ im Kanal 17 geschützt untergebracht. Der Kanal 17 ist so breit, daß die Klauen 9 ungehindert durchfahren können.

Gemäß Figur 3 ist der Führungsschlitz 24 entlang zumindest einer Schlitzkante mit in vorgegebenen Abständen liegenden Ausnehmungen 26 ausgestattet, zweckmäßigerweise auch mit jeweils gegenüberliegenden Ausnehmungen 26'. Der Feststeller 25 ist gemäß Figur 4 als Mutter ausgebildet, die einen Drehgriff 27, einen unterseitigen Verriegelungsansatz 28 und eine oberseitige größer dimensionierte und ebene Spannfläche 29 aufweist. Der Verriegelungsansatz 28 paßt genau in jeweils zwei sich gegenüberliegende Ausnehmungen 26 und 26', um eine bestimmte Winkelposition zwischen der Grundplatte 18 und der Platte 7 formschlüssig festzulegen. In Zwischenstellungen drückt der Verriegelungsansatz 28 auf die Vorsprünge zwischen den Ausnehmungen 26. Wird eine stufenlose Verstellbarkeit gewünscht, dann wird der Feststeller 25 umgedreht aufgeschraubt, so daß er mit seiner Spannfläche 29 auf die Platte 20 drückt und diese an der Grundplatte 18 bzw. der Verlängerung 21 festspannt.

Der Feststeller 25 könnte auch eine Schraube sein, die in eine Gewindebohrung der Verlängerung 21 eingeschraubt wird.

Beim Arbeiten mit dem Schiebeschlitten A in der in Figur 1 gezeigten Lage wird das Werkstück festgelegt und dem Fräswerkzeug W entlanggefahren. Reicht der zur Verfügung stehende Schiebehub nicht aus, wird das Werkzeug ausgespannt, der Schiebeschlitten bis über die Aushebe-Aussparungen 19 verfahren, ausgehoben und um 180^{o} verdreht wieder aufgesetzt. Dann wird das Werkstück wieder festgespannt und eingerichtet, ehe die Bearbeitung nochmals über den gleichen Schiebehub des Schiebeschlittens fortgesetzt wird. Wird der Schiebeschlitten A nicht benötigt, dann wird er abgenommen. Die Werkstücke werden dann von Hand in herkömmlicher Weise beim Bearbeiten geführt. Sowohl bei Verwendung des Schiebeschlittens als auch ohne Schiebeschlitten kann ein Vorschubapparat benutzt werden, um eine gleichmäßige Vorschubbewegung des Werkstücks zu steuern. Anstelle zweier Klauen 9 könnte auch eine geschlitzte Hülse als einzige Klaue zur Führung des Schiebeschlittens benutzt werden. Es wird dann nur ein einziges Aushebe-Aussparungspaar in der Länge der Hülse notwendig. Denkbar ist es ferner, die Stange 5 ohne Aushebe-Aussparungen 19 auszubilden und dafür einen einfachen Mechanismus vorzusehen, um die Klauen zum Ausheben und Umsetzen zu spreizen und für das Arbeiten wieder eng an die Stange 5 anzulegen. Ferner könnte anstelle eines schraubbaren Verstellers 25 auch ein Exzenter-Spannhebel oder eine ähnliche Spannvorrichtung benutzt werden, um die Platte 7 in der jeweils gewünschten Relativlage auf der Grundplatte 18 festzulegen. Bei Ausführungsformen, bei denen die Platte 7 nicht verschwenkt werden soll, können die Klauen 9 direkt an der Platte 7 angebracht sein und die Grundplatte 18 weggelassen werden. Beim Verschieben des Schiebeschlitzes A läßt sich der Drehzapfen 10 als Handhabe benutzen. Es ist aber auch denkbar, an anderer Stelle des Schiebeschlittens A einen Griff anzubringen, mit dessen Hilfe der Schiebeschlitten einfach manipuliert werden kann. Ferner besteht die Möglichkeit, die Stange 5 als Schiene auszubilden und von unten her im Kanal 17 festzulegen, so daß ihre beiden Enden frei sind. Der Schiebeschlitten könnte dann an beiden Seiten einfach vom Tisch weggeschoben und abgenommen werden.

## Patentansprüche

1. Tischfräsmaschine zur Holzbearbeitung mit einem Arbeitstisch, über dessen Arbeitsfläche (1) ein um eine in etwa vertikale Achse antreibbares Fräswerkzeug vorsteht und unterhalb dieser Arbeitsfläche (1) parallel zu einer Tisch-Hauptachse eine Längsführung (L) für einen eine Werkstück-Fixierung (B) aufweisenden Schiebeschlitten (A) vorgesehen ist, dadurch gekennzeichnet, daß die Längsführung (L) in einem nur wenig mehr als die halbe Schiebeschlittenbreite betragenden Abstand vom Fräswerkzeug (W) und parallel zur Fräsrichtung liegt, und daß der Schiebeschlitten (A) mittels einer Schnell-Umsetz-Halterung (H) abnehmbar und in zwei zueinander um 180° versetzten Fahrstellungen auf die Arbeitsfläche und die Längsführung (L) aufsetzbar ist.

2. Fräsmaschine nach Anspruch 1, dadurch gekennzeichnet, daß am Arbeitstisch (T) in Fahrtrichtung des Schiebeschlittens (A) vordere und hintere Verlängerungsflächen (V₁, V₂) befestigt sind, und daß die Längsführung (L) zwischen einer Stirnseite (16) des Arbeitstisches (T) sowie den Stirnseiten der Verlängerungsflächen (V₁, V₂) und der Stirnseite (15) einer am Arbeitstisch (T) befestigten Verbreiterungsfläche (V₃) eingebaut ist.

3. Fräsmaschine nach Anspruch 2, dadurch gekennzeichnet, daß jede Verlängerungsfläche (V₁, V₂) mindestens so lang ist, wie der Schiebeschlitten (A) in Fahrtrichtung, und daß die Breite der Verbreiterungsfläche (V₃) größer ist als die halbe Breite des Schiebeschlittens quer zur Fahrtrichtung.

4. Fräsmaschine nach Anspruch 1 und/oder 2, dadurch gekennzeichnet, daß die einander zugekehrten Stirnseiten (15, 16) des Arbeitstisches (T) und der Verbreiterungsfläche (V₃) einen längsdurchgehenden Kanal (17) begrenzen, dessen beide Enden durch Abschlußprofile (3) überbrückt sind, und daß die als Stange ausgebildete Längsführung (L) beidendig an den Abschlußprofilen (3) festgelegt ist.

5. Fräsmaschine nach Anspruch 1, dadurch gekennzeichnet, daß die Schnell-Umsetz-Halterung (H) wenigstens eine nach unten offene Klaue (9) am Schiebeschlitten (A) und wenigstens eine Aushebe-Aussparung (19) an der Stange (5) aufweist, daß die Klaue (9) die Stange (5) über mehr als 180° ihres Umfangs von oben umfaßt, und daß die Klaue (9) in der Aushebe-Aussparung (19) nach oben von der Stange (5) aushebbar bzw. von oben über die Stange (5) setzbar ist.

6. Fräsmaschine nach Anspruch 5, dadurch gekennzeichnet, daß zwei beabstandete U-förmige Klauen (9) am Schiebeschlitten (A) und zwei mit dem Abstand der Klaue (9) beabstandete Aushebe-Aussparungspaare (19) an der Stange (5) vorgesehen sind.

7. Fräsmaschine nach wenigstens einem der Ansprüche 1 bis 6, dadurch gekennzeichnet, daß die Abschlußprofile (3) Anschläge für den Schiebeschlitten (A) bilden, und daß die beiden Aushebe-Aussparungspaare (19) geringfügig weiter von einem Abschlußprofil (3) weggesetzt sind, als es den Stangenpositionen der beiden Klauen (9) beim Anschlag des Schiebeschlittens (A) an diesem Abschlußprofil (3) entspricht.

8. Fräsmaschine nach mindestens einem der Ansprüche 1 bis 7, deren Schiebeschlitten (A) eine zur Arbeitsfläche (1) parallele Platte (7) und einen hochstehenden und zur Längsführung (L) um eine vertikale Schwenkachse nach beiden Seiten, bevorzugt um jeweils 45°, schwenkbaren Schenkel (8) sowie wenigstens eine schwenkbare Schraubzwinge (11, 12, 13, 14) als Werkstück-Fixierung (B) aufweist, dadurch gekennzeichnet, daß eine unterseitig die Klauen (9) tragende Grundplatte (18) mit einem vertikalen Drehzapfen (10) und einem davon beabstandeten Gewindebolzen (22) bzw. einer Gewindebohrung vorgesehen ist, daß die Platte (7) eine Verlängerung (20) mit einer Bohrung (30) für den Drehzapfen (10) und einen zur Bohrung (30) konzentrischen Führungsschlitz (24) aufweist und auf die Grundplatte (18) aufgelegt ist, und daß die Platte (7) auf der Grundplatte (18) mittels eines von oben auf den den Führungsschlitz (24) durchsetzenden Gewindebolzen (22) aufgeschraubten Feststeller (25) gegen die Grundplatte (18) spannbar ist.

9. Fräsmaschine nach Anspruch 8, dadurch gekennzeichnet, daß der Führungsschlitz (24) entlang wenigstens einem Schlitzrand, vorzugsweise entlang beider Schlitzränder, beabstandete Ausnehmungen (26, 26') für einen Verriegelungsansatz (28) des Feststellers (25) aufweist.

10. Fräsmaschine nach Anspruch 9, dadurch gekennzeichnet, daß der Feststeller (25) an einer Seite den Verriegelungsansatz (28) und an der gegenüberliegenden Seite eine im Durchmesser größere Spannfläche (29) aufweist und in um 180° gedrehten Stellungen auf den Gewindebolzen (22) aufschraubbar ist.

11. Tischfräsmaschine zur Holzbearbeitung, insbesondere für Heimwerker und für Kleinbetriebe, mit einem Arbeitstisch, über dessen Arbeitsfläche ein um eine in etwa vertikale Achse antreibbares Fräswerkzeug vorsteht, gekennzeichnet durch einen Nachrüst-Bausatz für den Arbeitstisch, bestehend aus
Verlängerungs- und Verbreiterungsflächen (V₁, V₂, V₃) für drei aneinander angrenzende Stirnseiten des Arbeitstisches (T),
Befestigungselemente (4, 3) für die Verlängerungs- bzw. Verbreiterungsflächen (V₁, V₂, V₃),
eine als Längsführung (L) dienende zylindrische und glatte Stange (5) in einer der vergrößerten Arbeitstischlänge entsprechenden Länge und
einem eine Schnell-Umsetzhalterung (H) aufweisenden, an der Stange (5) anbringbaren Schiebeschlitten (A) mit einer Werkzeugfixierung (W).
